# EUROPEAN PATENT APPLICATION

(11) **EP 3 305 683 A1**
(43) Date of publication of application: **11.04.2018**
(21) Application number: 16802992.4
(22) Date of filing: 10.05.2016
(51) Int. Cl.: B65D 65/40, B32B 27/32

(54) **LOW-ABSORPTION PACKAGING BAG**

(30) Priority: 03.06.2015 JP 2015113259
(71) Applicant: Polyplastics Co., Ltd., Tokyo 108-8280 (JP)
(72) Inventor: OKAWA, Hidetoshi, Tokyo 108-8280 (JP)
(74) Representative: Lux, Berthold
(86) International application number: PCT/JP2016/063853
(87) International publication number: WO 2016/194555

(57) **Abstract**

Provided is a low- adsorptivity packaging bag equipped with a sealant layer that satisfies all of the following: heat-sealability, low adsorptivity, cuttability, and water-vapor barrier properties. A low- adsorptivity packaging bag for storing contents containing a low-molecular-weight volatile compound, wherein a layered body provided with a substrate layer comprising one or more layers and a sealant layer containing a cyclic olefin resin having a glass transition temperature of 50-190°C, inclusive, is formed as a result of heat-sealing with the sealant layer side as the inside surface thereof.

## Description

### TECHNICAL FIELD

The present invention relates to a low adsorptivity packaging bag having a sealant layer of a content face side which is excellent in low adsorptivity (non- adsorptivity) to volatile low molecular compounds derived from contents such as medicines, foods, cosmetics or the like.

### BACKGROUND ART

A cyclic olefin-based resin is a resin having a skeleton of a cyclic olefin at the main chain, and is a resin having many characteristics such as high transparency, a high heat deformation temperature, low birefringence, resistance to hydrolysis, and the like. Therefore, cyclic olefin resins are used in a great diversity of fields where these characteristics are required.

For example, the below Patent Document 1, as a film for packaging, discloses a film for packaging having as a sealant layer a layer comprising a cyclic olefin-based resin having a Tg of 30°C to 55°C. According to such a film, it becomes possible to heat seal at a very low temperature.

On the other hand, volatile low molecular compounds derived from contents such as medicines, foods, cosmetics and the like may be present among the contents of a package, and these are compounds which are readily absorbed in the sealant layer of a packaging bag. Therefore, as a sealant with low adsorptivity with respect to volatile low molecular compounds, EVOH (ethylene-vinyl alcohol copolymer), PAN (polyacrylonitrile), PET-G (dimethanol-polyethylene terephthalate) and the like have mainly been researched.

Patent Document 1: Japanese Unexamined Patent Application (Translation of PCT Application), Publication No. 2007-515511

### DISCLOSURE OF THE INVENTION

### Problems to be Solved by the Invention

As described above, EVOH, PAN, PET-G and the like which are previously known low adsorptivity sealants are excellent in low adsorptivity, but may be inferior in the points of other properties as packaging materials such as ease of cutting, moisture barrier properties, and the like, and in some cases were also not satisfactory in heat seal properties. Therefore, there has been demand for low adsorptivity packaging bags provided with a sealant film (sealant layer) which satisfies all of heat seal properties, low adsorptivity, ease of cutting, and moisture barrier properties.

The present invention was made in order to solve the above described problems, and its objective is to provide a low adsorptivity packaging bag provided with a sealant film (sealant layer) which satisfies all of heat seal properties, low adsorptivity, ease of cutting, and moisture barrier properties.

### Means for Solving the Problems

The present inventors carried out repeated diligent research in order to solve the above described problems. As a result, they discovered that the above described problems can be solved by a low adsorptivity packaging bag utilizing made from a layered body using a sealant layer comprising a cyclic olefin-based resin with a glass transition point of 50°C to 190°C, and thus completed the present invention. More specifically, the present invention provides the following.

The first aspect of the present invention is a low adsorptivity packaging bag for storing a content comprising a volatile low molecular compound with a molecular weight of no more than 800, wherein a layered body provided with a substrate layer consisting of one or a plurality of layers, and a sealant layer comprising a cyclic olefin-based resin having a glass transition point of 50°C to 190°C, is formed by a heat seal with the sealant layer as an inner face.

The second aspect of the present invention is a low adsorptivity packaging bag according to the first aspect, wherein the glass transition point is 60°C to 150°C.

The third aspect of the present invention is a low adsorptivity packaging bag according to the first or second aspect, wherein the glass transition point is 60°C to 100°C.

The fourth aspect of the present invention is a low adsorptivity packaging bag according to any one of the first to third aspects, wherein the content is one or more selected from a food, a medicine, and a cosmetic.

The fifth aspect of the present invention is a low adsorptivity packaging bag according to any one of the first to fourth aspects, wherein the cyclic olefin-based resin is a copolymer of ethylene and norbornene.

The sixth aspect of the present invention is a low adsorptivity packaging bag according to any one of the first to fifth aspects, wherein at least one layer of the substrate layer is a biaxially stretched polyethylene terephthalate film.

The seventh aspect of the present invention is a low adsorptivity packaging bag according to any one of the first to sixth aspects, wherein at least one layer of the substrate layer is a metal foil, a metal deposition layer, or a metallic oxide deposition layer.

### Effects of the Invention

According to the present invention, is it possible to provide a low adsorptivity packaging bag provided with a sealant film (sealant layer) which satisfies all of heat seal properties, low adsorptivity, ease of cutting, and moisture barrier properties.

### PREFERRED MODE FOR CARRYING OUT THE INVENTION

Below, embodiments of the invention are explained in detail. Further, the present invention is not limited to the below embodiments, and may be implemented with suitable modifications within the scope of the objective of the present invention.

### <Low adsorptivity Packaging Bag>

The low adsorptivity packaging bag of the embodiment of the present invention is a packaging bag for storing a content comprising a volatile low molecular compound with a molecular weight of no greater than 800, wherein this low adsorptivity packaging bag is a layered body provided with a substrate layer and a sealant layer, and the sealant layer comprises a cyclic olefin-based resin with a glass transition point of 50°C to 190°C.

As the layered body provided with the substrate layer and the sealant layer, for example a layered body with polyethylene terephthalate and a sealant layer, with polyethylene terephthalate as the substrate layer, and polyethylene terephthalate as the sealant layer, or a layered body provided with a metal layer such as aluminum or the like between the polyethylene terephthalate and the sealant layer, or the like may be mentioned as examples.

The sealant layer disposed at an inner side of the low adsorptivity packaging bag of the embodiment of the present invention is a layer with low adsorptivity with respect to volatile molecular compounds with a molecular weight of no greater than 800, preferably no greater than 500. The content packaged by the low adsorptivity packaging bag of the the embodiment of the present invention is not particularly limited provided that it is a content comprising a volatile low molecular compound with a molecular weight of no greater than 800, and for example, it can be especially suitably used as a packaging bag for a medicine, a food, or a cosmetic having a volatile low molecular compound. As the volatile low molecular compound, for example, dl-camphor, 1-menthol, methyl salicylate, tulobuterol, nicotine, bromhexine hydrochloride, and the like may be mentioned. Below, each layer constituting the low adsorptivity packaging bag of the embodiment of the present invention is explained.

### [Sealant Layer]

The sealant layer in the embodiment of the present invention is a layer disposed at the inner side of the low adsorptivity packaging bag of the embodiment of the present invention. The cyclic olefin-based resin included in the sealant layer of the embodiment of the present invention is a cyclic olefin-based resin of 50°C to 190°C, and is a monopolymer of a cyclic olefin, or a copolymer comprising a cyclic olefin component as a copolymer component, and is a polyolefin-based resin comprising a cyclic olefin component at the main chain. The sealant layer in the embodiment of the present invention has a low adsorptivity with respect to volatile low molecular compounds with a molecular weight of no greater than 800. Further, at the same time, it has high heat seal properties, ease of cutting, and moisture barrier properties. The sealant layer may be formed by melt extrusion by a previously well known inflation method or T die method, and the thickness of the sealant layer is preferably 5 µm to 100 µm, and more preferably 10 µm to 50 µm.

The cyclic olefin-based resin included in the sealant layer is a cyclic olefin-based resin of 50°C to 190°C, and is not particularly limited provided that is a cyclic olefin-based resin comprising a cyclic olefin component. For example, an addition polymer of a cyclic olefin or hydrogenation product thereof, or an addition copolymer of a cyclic olefin and α-olefin or a hydrogenation product thereof, or the like may be mentioned. The cyclic olefin-based resin may be used as one single type, or two or more types may be used in combination. If the layered body is provided with a sealant layer comprising a cyclic olefin-based resin with a glass transition point of 50°C to 190°C, it is possible to make the low adsorptivity packaging bag satisfy all of heat seal properties, low adsorptivity, ease of cutting, and moisture barrier properties. Below, the cyclic olefin-based resin included in the sealant layer of the embodiment of the present invention is explained.

### (Cyclic Olefin-Based Resin)

As the cyclic olefin-based resin, one where, in the above described polymer or the above described copolymer comprising at the main chain structural units derived from a cyclic olefin, an unsaturated compound further having a polar group is grafted or copolymerized, may also be mentioned.

As the polar group, for example, a carboxyl group, acid anhydride group, epoxy group, amide group, ester group, hydroxyl group, and the like may be mentioned, and as the unsaturated compound having a polar group, (meth)acrylic acid, maleic acid, maleic anhydride, itaconic anhydride, glycidyl (meth)acrylate, alkyl (meth)acrylate (carbon number 1 to 10) esters, alkyl maleate (carbon number 1 to 10) esters, (meth)acrylamide, (meth)acrylic acid-2-hydroxyethyl, and the like may be mentioned.

Further, as a copolymer which may be used for the cyclic olefin-based resin in the embodiment of the present invention, commercially available resins may be used. As the commercially available cyclic olefin-based resins, for example, TOPAS (registered trademark; produced by TOPAS Advanced Polymers), APEL (registered trademark; produced by Mitsui Chemicals, Inc.), ZEONEX (registered trademark; produced by Zeon Corporation), ZEONOR (registered trademark; produced by Zeon Corporation), ARTON (registered trademark, produced by JSR Corporation), and the like may be mentioned.

As an addition copolymer of a cyclic olefin and an α-olefin, as a particularly preferable example, a copolymer comprising [1] a structural unit derived from an α-olefin with a carbon number of 2 to 20, and [2] a structural unit derived from a cyclic olefin represented by the below general formula (b), may be mentioned.

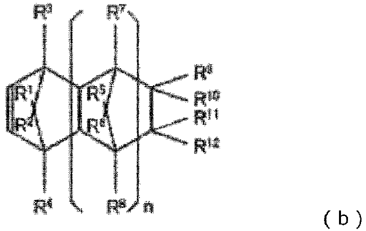

(In the formula, R¹ to R¹² may be the same or different, and are selected from the group consisting of a hydrogen atom, a halogen atom, and a hydrocarbon group,
R⁹ and R¹⁰, and R¹¹ and R¹² may be integrated to form a divalent hydrocarbon group,
R⁹ and R¹⁰, and R¹¹ and R¹² may form a ring with each other.

Further, n represents 0 or a positive integer, and in the case that n is 2 or more, among the respective repeating units, R⁵ to R⁸ may respectively be the same or different.)

### [[1] α-olefin With a Carbon Number of 2 to 20]

The α-olefin with a carbon number of 2 to 20 is not particularly limited. For example, the same one as disclosed in Japanese Unexamined Patent Application, First Publication No. 2007-302722 may be mentioned. Further, this α-olefin may be used as one single type, or two or more types may be used at the same time. Among these, the single use of ethylene is most preferable.

### [[2] Cyclic Olefin Represented by General Formula (b)]

The cyclic olefin represented by the general formula (b) is explained. R¹ to R¹² in the general formula (b) may respectively be the same or different, and are selected from the group consisting of a hydrogen atom, a halogen atom, and a hydrocarbon group. As a specific example of the cyclic olefin represented by the general formula (b), the same as those disclosed in Japanese Unexamined Patent Application, First Publication No. 2007-302722 may be mentioned.

These cyclic olefins may be used as one single type, or two or more types may be used in combination. Among these, the single use of bicyclo[2.2.1]hepta-2-ene (common name: norbornene) is preferable.

The polymerization method of the [1] α-olefin with a carbon number of 2 to 20 and [2] the cyclic olefin represented by the general formula (b), and hydrogenation method of the obtained polymer are not particularly limited, and may be carried out by a publicly known method.

Further, the used polymerization catalyst is not particularly limited, and the cyclic olefin-based resin may be obtained by a publicly known method using a previously known catalyst such as a Ziegler-Natta-based, metathesis-based, metallocene-based catalyst the like.

Further, the hydrogenation method of the obtained cyclic olefin-based resin is not particularly limited, and a previously known method may be applied.

Further, the cyclic olefin-based resin may also include other copolymerizable unsaturated monomer components as required, within a range which does not impair the objective of the present invention, in addition to the [1] α-olefin component with a carbon number of 2 to 20, and [2] cyclic olefin component represented by the general formula (b). An unsaturated monomer which may be optionally copolymerized is not particularly limited, and for example, a hydrocarbon-based monomer including two or more carbon-carbon double bonds in one molecule may be mentioned. As specific examples of the hydrocarbon-based monomer including two or more carbon-carbon double bonds in one molecule, the same as those in Japanese Unexamined Patent Application, First Publication No. 2007-302722 may be mentioned.

Among cyclic olefin-based resins, addition copolymers of ethylene and norbornene in particular have heat seal properties, low adsorptivity, ease of cutting, and moisture barrier properties, and are especially favorable as low adsorptivity packaging bags. Accordingly, as the cyclic olefin-based resin in the embodiment of the present invention, addition copolymers of ethylene and norbornene are especially preferable.

The glass transition point of the cyclic olefin-based resin is preferably 50°C to 190°C, more preferably 60°C to 150°C, and even more preferably 60°C to 100°C. A glass transition point of the cyclic olefin-based resin of less than 50°C is not preferable from the viewpoint of heat resistance. A glass transition point of the cyclic olefin-based resin exceeding 190°C is not preferable from the viewpoint of heat seal properties.

The glass transition point (Tg) of the cyclic olefin-based resin is taken as the value measured by the DSC method (the method disclosed in JIS K7121) under conditions of a temperature increase rate of 10°C/min.

The cyclic olefin-based resin preferably has an MVR of 1 ml/10 min to 100 ml/10 min, measured under conditions of 260°C, and a load of 2.16 kg, by a method in conformance with ISO1133. If the MVR of the cyclic olefin-based resin is less than 1 ml/10 min, the flowability may be impaired in some cases. Further, if the MVR of the cyclic olefin-based resin becomes higher than 100 ml/10 min, the mechanical strength of the cyclic olefin-based resin itself decreases, and it may become unsuitable for low adsorptivity packaging bag applications in some cases.

The lower limit of the content of the cyclic olefin-based resin is not particularly limited, but is preferably 95 mass% or more of the total composition of the sealant layer, and more preferably 98 mass% or more. The upper limit of the content of the cyclic olefin-based resin is not particularly limited, but is preferably 100 mass% of the total composition of the sealant layer.

### (Other Components)

In the sealant layer of the embodiment of the present invention, components other than the cyclic olefin-based resin may also be included. As such other components, other types of thermoplastic resins, or additives such as stabilizers, toughening agents, plasticizers, colorants and the like are mentioned as examples.

### [Substrate Layer]

The substrate layer of the embodiment of the present invention is a layer provided in the layered body, and is mainly a layer disposed other than at an inner side of the low adsorptivity packaging bag. The substrate layer of the embodiment of the present invention is not particularly limited, and for example, a substrate layer where at least one layer of the substrate layer is constituted of a resin film of a polyethylene terephthalate resin, a nylon resin, a polypropylene resin, a polyethylene resin, and the like may be mentioned. From the viewpoint of durability and versatility, at least one layer of the substrate layer is preferably a biaxially stretched polyethylene terephthalate film. Further, the substrate layer is not necessarily a single layer, and may be constituted by a plurality of layers.

Further, at least one layer of the substrate layer may be provided with a metal foil, a metal deposition layer, or a metallic oxide deposition layer of aluminum or the like. By providing a metal foil, a metal deposition layer, or a metallic oxide deposition layer at the substrate layer, is it possible to make the low adsorptivity packaging bag have a moisture barrier property.

The thickness of the substrate layer is not particularly limited, but for example is preferably 5 µm to 50 µm, and more preferably 10 µm to 40 µm.

### <Production Method of the Low adsorptivity Packaging Bag>

The production method of the low adsorptivity packaging bag of the embodiment of the present invention is not particularly limited. For example, a layered body may be formed by publicly known lamination methods such as an extrusion and coating method, a hot lamination method, a dry lamination method, and the like. Then, it may also be produced by preparing two sheets of the layered body, superposing them such that sealant layers of the sheets of the layered body face each other, and heat sealing.

One example of the production method of the low adsorptivity packaging bag of the embodiment of the present invention is shown. First, a layered body provided with a substrate layer and a sealant layer is produced. The layered body, as described above, may also comprise other layers such as a vapor deposition layer and the like as the substrate layer. As these other layers, it is possible to apply previously well known ones within a scope which does not impair the effects of the present invention.

Each layer of the layered body of the embodiment of the present invention may be adhered via an adhesive layer. As the adhesive forming the adhesive layer, for example, one fluid or two fluid curing type urethane-based adhesives may be used.

Next, the low adsorptivity packaging bag is produced using the layered body. It is possible to easily produce the low adsorptivity packaging bag by heat sealing the circumference of the layered body using a heat seal device such as an extension seal portion or the like.

### EXAMPLES

Below, the present invention is specifically explained by showing examples, but the present invention is not limited by these examples.

### [Volatile Low Molecular Compound adsorptivity Test 1]

The rate of adsorptivity of a volatile low molecular compound was measured for each resin sheet. Specifically, each resin sheet disclosed in Table 1 (50 mm x 70 mm, thickness 50µm), as a sealant layer of the present invention, was affixed on both faces with a commercially sold compress medication (comprising, as the volatile substance, dl-camphor (molecular weight: 152), 1-menthol (molecular weight: 156), methyl salicylate (molecular weight: 152)), and after standing for 16 hours, the amount of the volatile compound (dl-camphor, 1-menthol, methyl salicylate) absorbed in the resin sheet was measured by a headspace GC method. The results are shown in Table 1.

**[Table 1]**

| resin sheet | d1-camphor | 1-menthol | methyl salicylate |
|---|---|---|---|
| COC | 6microgram | 19microgram | 79microgram |
| PAN | 5microgram | 37microgram | 11microgram |
| PP | 266microgram | 1142microgram | 5701microgram |
| HDPE | 378microgram | 1903microgram | 3334microgram |
| LDPE | 777microgram | 2044microgram | 3907microgram |

(In the table, for PAN, HITORON BX produced by Tamapoly Co., Ltd., was used. Other than PAN, membranes were formed from resin. Specifically, COC means a resin sheet made by forming a membrane from a copolymer of ethylene and norbornene (product name "TOPAS 8007F-04", produced by TOPAS Advanced Polymer Co., glass transition point 78°C), PP means a resin sheet made by forming a membrane from polypropylene (Novatec FX4E produced by Japan Polypropylene Corporation), HDPE means a resin sheet made by forming a membrane from high density polyethylene (product name "Novatec HD HJ580N", produced by Japan Polyethylene Corporation, melting point 134°C), and LDPE means a resin sheet made by forming a membrane from low density polyethylene (Novatec LC522 produced by Japan Polyethylene Corporation).

From Table 1, it can be understood that the resin sheet of COC which is a cyclic olefin (copolymer of ethylene and norbornene), has an extremely low rate of adsorptivity of dl-camphor, 1-menthol, and methyl salicylate compared to the resin sheets of PP (polypropylene), HDPE (high density polyethylene), and LDPE (low density polyethylene), and had an equivalent rate of adsorptivity to the resin sheet of PAN. From these experimental results, it can be understood that the low adsorptivity packaging bag of the present invention where a packaging bag is made from a layered body provided with a sealant layer comprising a cyclic olefin-based resin, has a small rate of adsorptivity of volatile low molecular compounds, and excels as a low adsorptivity packaging bag for contents having volatile low molecular compounds.

### [Volatile Low Molecular Compound adsorptivity Test 2 (Gas Phase adsorptivity)]

The rate of adsorptivity of volatile low molecular compounds was measured for each resin sheet. Specifically, each sheet disclosed in Table 2 (50 mm x 50 mm, thickness 30 µm) and a volatile substance (tulobuterol molecular weight: 228, Wako Pure Chemical Industries, Ltd., tulobuterol (isomeric blend) for pharmaceutical research) were placed into a desiccator which was sealed, and after standing for 2 weeks, the amount of the volatile substance (tulobuterol) absorbed in the resin sheet was measured by a headspace
GC method. The results are shown in Table 2.

**[Table 2]**

| resin sheet | tulobuterol |
|---|---|
| COC(TOPAS 8007F-04) | 0.04microgram |
| COC(TOPAS 6013F-04) | 0.07microgram |
| PAN | 1.9microgram |
| LLDPE | 4.8microgram |

In the table, for PAN, HITORON BX produced by Tamapoly Co., Ltd., was used. Other than PAN, membranes were formed from resin. Specifically, COC (TOPAS 8007F-04) means a resin sheet made by forming a membrane from a copolymer of ethylene and norbornene (produced by TOPAS Advanced Polymer Co., product name "TOPAS 8007F-04", glass transition point 78°C), COC (TOPAS 6013F-04) means a resin sheet made by forming a membrane from a copolymer of ethylene and norbornene (produced by TOPAS Advanced Polymer Co., product name "TOPAS 6013F-04", glass transition point 138°C), and LLDPE means a resin sheet made by forming a membrane from a linear low density polyethylene (produced by Dow Chemical Co., ELITE 5100G, density 0,92 g/cm³).

From Table 2, it can be understood that a resin sheet of COC which is a cyclic olefin (a copolymer of ethylene and norbornene) has a small rate of adsorptivity of tulobuterol compared to resin sheets of PAN (polyacrylonitrile) and LLDPE (linear low density polyethylene). From these experimental results, it can be understood that the low adsorptivity packaging bag of the present invention where a packaging bag is made from a layered body provided with a sealant layer comprising a cyclic olefin-based resin, has a small rate of adsorptivity of volatile low molecular compounds, and excels as a low adsorptivity packaging bag for contents having volatile low molecular compounds.

### [Ease of Cutting Test for Layered Body]

A layered body was produced by integrating by dry lamination the inflation films disclosed in Table 3 (thickness 100 µm) and polyethylene terephthalate, and ease of cutting tests were carried out for the layered body. Specifically, the following evaluations were carried with the following evaluation basis for whether the layered body can be easily cut by hand. The evaluation results are shown in Table 3.

### [Evaluation Basis]

A: can be easily cut
B: cutting is possible, but somewhat difficult
C: cutting is impossible, or cutting is very difficult

**[Table 3]**

| | sealant layer | ease of cutting |
|---|---|---|
| Example | COC | A |
| Comparative Example1 | EVOH | B-C |
| Comparative Example2 | PAN | A |
| Comparative Example3 | PET-G | B |

(In the table, for PAN, HITORON BX produced by Tamapoly Co., Ltd., was used. Other than PAN, membranes were formed from resin. Specifically, COC means a resin sheet made by forming a membrane from a copolymer of ethylene and norbornene (produced by TOPAS Advanced Polymer Co., product name "TOPAS 8007F-04", glass transition point 78°C), EVOH means a resin sheet made by forming a membrane from an ethylene•vinyl alcohol copolymer resin (EVAL F produced by Kuraray Co., Ltd.), PET-G means a resin sheet made by forming a membrane from dimethanol-polyethylene terephthalate (EASTAR GN001 produced by Eastman Co.).

According to Table 3, it can be understood that a layered body using COC (copolymer of ethylene and norbornene) as the sealant layer is a layered body excelling in ease of cutting compared to layered bodies using other resin sheets as sealants. Therefore, it can be understood that the low adsorptivity packaging bag of the present invention excels in ease of cutting, and also is excellent as a packaging bag for storing contents comprising volatile low molecular compounds.

## Claims

1. A low adsorptivity packaging bag for storing a content comprising a volatile low molecular compound with a molecular weight of no more than 800, wherein
a layered body provided with a substrate layer consisting of one or a plurality of layers, and a sealant layer comprising a cyclic olefin-based resin having a glass transition point of 50°C to 190°C, is formed by a heat seal with the sealant layer as an inner face.

2. A low adsorptivity packaging bag according to claim 1, wherein the glass transition point is 60°C to 150°C.

3. A low adsorptivity packaging bag according to claim 1 or 2, wherein the glass transition point is 60°C to 100°C.

4. A low adsorptivity packaging bag according to any one of claims 1 to 3, wherein the content is one or more selected from a food, a medicine, and a cosmetic.

5. A low adsorptivity packaging bag according to any one of claims 1 to 4, wherein the cyclic olefin-based resin is a copolymer of ethylene and norbornene.

6. A low adsorptivity packaging bag according to any one of claims 1 to 5, wherein at least one layer of the substrate layer is a biaxially stretched polyethylene terephthalate film.

7. A low adsorptivity packaging bag according to any one of claims 1 to 6, wherein at least one layer of the substrate layer is a metal foil, a metal deposition layer, or a metallic oxide deposition layer.
